# EUROPEAN PATENT APPLICATION

(11) **EP 4 438 555 A1**
(43) Date of publication of application: **02.10.2024**
(21) Application number: 22895565.4
(22) Date of filing: 14.11.2022
(51) Int. Cl.: C01B 17/36, C01B 17/28

(54) **METHOD FOR PRODUCING LITHIUM SULFIDE**

(30) Priority: 22.11.2021 JP 2021189603
(71) Applicant: Mitsui Mining & Smelting Co., Ltd., Shinagawa-ku Tokyo 141-8584 (JP)
(72) Inventor: KAWAMURA, Takeru, Ageo-shi, Saitama 362-0021 (JP)
(74) Representative: Novagraaf Technologies
(86) International application number: PCT/JP2022/042189
(87) International publication number: WO 2023/090283

(57) **Abstract**

The present invention provides a method for producing lithium sulfide, including: a preparation step of preparing a composition that, in an X-ray diffraction pattern as measured using an X-ray diffraction apparatus using CuKα1 rays, has a diffraction peak A at the position of 2θ = 31.2°±1.0° and a diffraction peak B at the position of 2θ = 22.2°±1.0°, and has a value of I_{b} to Iₐ of 0.04 or more, where the Iₐ is an intensity of the diffraction peak A and the I_{b} is an intensity of the diffraction peak B; and a reaction step of reacting the composition with hydrogen gas.

## Description

### Technical Field

The present invention relates to a method for producing lithium sulfide.

### Background Art

Lithium sulfide has been generally synthesized through the action of hydrogen sulfide on a compound that serves as a lithium source. For example,

Patent Literature 1 describes a method for producing lithium sulfide, by bringing hydrogen sulfide into contact with lithium carbonate that serves as a lithium source and is in a flowing state, at a temperature of 450°C or higher, thereby causing a reaction to occur therebetween.

Patent Literature 2 describes a method for producing lithium sulfide through a reaction between lithium hydroxide and hydrogen sulfide, including reacting hydrogen gas with sulfur vapor to produce a reaction gas containing hydrogen sulfide gas and hydrogen gas, and bringing the produced reaction gas into contact with particulate lithium hydroxide, thereby causing a reaction to occur therebetween to produce particulate lithium sulfide.

### Citation List

### Patent Literature

Patent Literature 1: JP 2013-075816A
Patent Literature 2: JP 2016-150860A

### Summary of Invention

Lithium sulfide produced by the conventional methods described above contains lithium sulfate, lithium thiosulfate, and lithium oxide as byproducts, or contains residual lithium carbonate serving as a starting material, and thus there is demand for a method that can produce lithium sulfide having a higher purity.

Therefore, it is an object of the present invention to provide a method that can produce lithium sulfide having a high purity.

The present invention provides a method for producing lithium sulfide, including:
a preparation step of preparing a composition that, in an X-ray diffraction pattern as measured using an X-ray diffraction apparatus using CuKα1 rays, has a diffraction peak A at the position of 2θ = 31.2°±1.0° and a diffraction peak B at the position of 2θ = 22.2°±1.0°, and has a value of I_{b} to Iₐ of 0.04 or more, where the Iₐ is an intensity of the diffraction peak A and the I_{b} is an intensity of the diffraction peak B; and
a reaction step of reacting the composition with hydrogen gas.

### Brief Description of Drawings

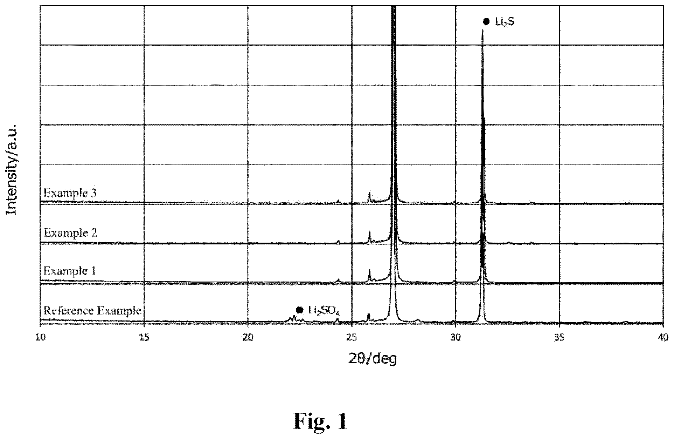

[Fig. 1] Fig. 1 is a graph showing the results of X-ray diffraction measurements for lithium sulfide obtained in examples and a reference example.

### Description of Embodiment

The present invention will be described below based on its preferred embodiment. A method for producing lithium sulfide (Li₂S) of the present invention has one of its features in that lithium sulfide containing impurities is reacted with hydrogen gas (H₂) to reduce the amount of impurities present, thereby obtaining lithium sulfide having a high purity. It can be said that lithium sulfide that contains impurities and is to be treated by the method of the present invention is a composition containing lithium sulfide and impurities. In that sense, in the following description, lithium sulfide that contains impurities and is to be treated by the method of the present invention is also referred to as a "composition".

In this production method, first, a step of preparing a composition that is to be treated by this production method is performed. The composition prepared through this step can be those obtained using conventionally known methods for producing lithium sulfide.

The conventionally known methods for producing lithium sulfide may be, for example, (1) a method for producing lithium sulfide, by bringing lithium carbonate into contact with sulfur-containing gas in a dry condition and heating the lithium carbonate (JP 2012-221819A, for example), (2) a method for producing lithium sulfide, by bringing lithium carbonate in a flowing state into contact with a gaseous sulfur compound at a temperature of 450°C or higher and not higher than the melting point of lithium carbonate (JP 2013-75816A, for example), (3) a method for producing lithium sulfide, by causing a gas-solid reaction to occur between lithium carbonate in a state of motion and hydrogen sulfide (JP 2014-193799A, for example), or the like. Details of particularly preferred methods for producing lithium sulfide using lithium carbonate as a raw material will be described later. Lithium sulfide produced using these methods may contain, as impurities, lithium sulfate that is a byproduct of the reaction between lithium carbonate serving as a starting material and sulfur. That is to say, a composition that is to be treated by this production method may be a composition containing lithium sulfide and lithium sulfate.

If the composition that is to be treated by this production method contains lithium sulfide and lithium sulfate, the content of lithium sulfate, that is, impurities in the composition can be quantitatively expressed through X-ray diffraction (hereinafter alternatively referred to as "XRD") measurement of the composition. Specifically, in an X-ray diffraction pattern as measured using an XRD apparatus using CuKα1 rays, the composition has a diffraction peak A at the position of 2θ = 31.2°±1.0° and a diffraction peak B at the position of 2θ = 22.2°±1.0°, and contains lithium sulfate in an amount to the extent that a value of I_{b} to Iₐ, that is, a value of I_{b}/Iₐ is 0.04 or more, where the Iₐ is an intensity of the diffraction peak A and the I_{b} is an intensity of the diffraction peak B. The value of I_{b}/Iₐ may be 0.19 or less, or 0.070 or less.

The peak A is a diffraction peak derived from the (200) plane of lithium sulfide, and the peak B is a diffraction peak derived from the (11-1) plane of lithium sulfate.

In this production method, the composition that is to be treated can be subjected to a heating step of reacting the composition with hydrogen gas in a state in which a powder of the composition is allowed to stand or caused to flow in an atmosphere containing hydrogen gas. The heating step can be performed in an open system. The state in which the heating step is performed in an open system means that the reaction system in which the heating step is performed is not located in an enclosed space. The heating step of the composition in this production method can be performed on a powder of the composition while circulating an atmosphere containing hydrogen gas. Specifically, the composition can be heated by heating a heating furnace in which a powder of the composition is placed while circulating 100% hydrogen gas or a hydrogen-containing gas containing hydrogen gas inside the heating furnace. Using such a heating method allows lithium sulfate that is impurities contained in the composition to react with hydrogen gas, and thus the lithium sulfate is reduced to produce lithium sulfide. As a result, the purity of lithium sulfide increases.

In this production method, it is sufficient that a composition having a predetermined X-ray diffraction pattern is reacted with hydrogen gas to reduce the proportion of impurities in the composition, thereby increasing the purity of lithium sulfide. Therefore, the purity of lithium sulfide obtained by this production method is not particularly limited, but is, for example, preferably 95 mass% or more, more preferably 97 mass% or more, and even more preferably 99 mass% or more.

If the atmosphere for use in the heating of the composition is a hydrogen-containing gas, the hydrogen-containing gas may contain various inert gases, for example, nitrogen gas, rare gases such as argon, and the like, as other gases in addition to hydrogen gas. Using hydrogen gas diluted with an inert gas is preferable from the viewpoint of safely carrying out this production method and from the viewpoint of efficiently causing the reaction to occur. The mixing proportion of a dilution gas and hydrogen gas is such that the proportion of the hydrogen gas is, for example, preferably 1.0 vol% or more, more preferably 1.5 vol% or more, and even more preferably 2.0 vol% or more, with respect to the total amount of the gases. Meanwhile, the proportion is, for example, preferably 4.0 vol% or less, more preferably 3.5 vol% or less, and even more preferably 3.0 vol% or less. This is because good safety and good reaction efficiency can be obtained.

The atmosphere for use in the heating of the composition is preferably 100% hydrogen gas or hydrogen gas diluted with an inert gas to a predetermined concentration, and the atmosphere preferably does not contain any other gases from the viewpoint of obtaining lithium sulfide having a high purity.

In the following description, for the sake of simplicity, both 100% hydrogen gas and hydrogen-containing gas are also collectively referred to simply as "hydrogen gas" depending on the context.

The heating temperature when reacting the composition with hydrogen gas is preferably set to 800°C or higher from the viewpoint of ensuring that lithium sulfate that is impurities contained in the composition is reliably reduced by hydrogen gas and removed. From this point of view, the heating temperature is, for example, preferably 800°C or higher, and more preferably 859°C or higher. Meanwhile, the heating temperature is, for example, preferably 1377°C or lower, more preferably 1000°C or lower, and even more preferably 900°C or lower. This is because lithium sulfate contained in the unrefined lithium sulfide can be sufficiently reduced by hydrogen gas and removed.

The heating temperature mentioned above refers to, for example, the heating temperature of a heating furnace when the composition that is to be treated is placed in the heating furnace.

If the composition in a heated state is reacted with hydrogen gas, the hydrogen gas may be circulated, for example, after the composition has been heated to the above-mentioned predetermined temperature or before the predetermined temperature is reached.

The time for reacting the composition in a heated state with hydrogen gas can be adjusted as appropriate according to other conditions such as the heating temperature. In the present invention, the reaction time is preferably set in such a manner that lithium sulfate contained in the unrefined lithium sulfide is sufficiently removed. The reaction time in the present invention is preferably 1 hour or longer, more preferably 2 hours or longer, and even more preferably 3 hours or longer.

The flow rate of hydrogen gas that is to be supplied for a reaction with the composition can be adjusted as appropriate according to the reaction temperature and the reaction time. In the present invention, the flow rate is preferably in such a manner that the value of the number of moles of hydrogen gas with respect to the number of moles of lithium sulfate is, for example, from 0.019 to 0.038 mol/min. This is because lithium sulfate contained in the unrefined lithium sulfide can be sufficiently removed.

When the composition is sufficiently reacted with hydrogen gas and lithium sulfate that is impurities contained in the composition is sufficiently removed, it is preferable to stop the reaction by stopping the circulation of hydrogen gas and stopping the heating of the reaction system. This is because the desired lithium sulfide can be obtained with a high purity.

The obtained lithium sulfide can be subjected to a pulverizing step and a sieving step as aftertreatment to produce a powder with an appropriate particle size distribution.

The lithium sulfide obtained using this production method is useful, for example, as a raw material for sulfide-based solid electrolytes in lithium ion batteries, taking advantage of its high purity. For example, solid electrolytes such as such as Li₇P₃S₁₁ and LiPS₄ can be synthesized through a mechanical milling reaction between lithium sulfide and phosphorus pentasulfide (P₂S₅) or other sulfides. Alternatively, a mixture of lithium sulfide, phosphorus pentasulfide, and lithium halide such as lithium chloride (LiCl) and/or lithium bromide (LiBr) can be fired in an inert gas atmosphere or a hydrogen sulfide atmosphere to synthesize a crystalline solid electrolyte such as a solid electrolyte having a crystal phase with an argyrodite-type crystal structure.

The substances to be reacted with lithium sulfide to synthesize a solid electrolyte are not particularly limited. Examples thereof include, in addition to the above-mentioned phosphorus pentasulfide, silicon sulfide (SiS₂) and germanium sulfide (GeS₂).

Next, a preferred method for producing the composition that is not the conventionally known methods for producing the composition, that is, a preferred preparation step of the composition in this production method will be described.

In the preparation step of the composition, lithium carbonate (Li₂CO₃) is used as one of the raw materials of the composition. Unlike other lithium source compounds such as lithium hydroxide, lithium carbonate has extremely low hygroscopicity and is thus advantageous compared with other lithium source compounds such as being easy to adjust the particle size, especially easy to reduce the particle size.

In the preparation step, powdered lithium carbonate can be used to produce the composition by reacting sulfur (S) vapor and hydrogen gas with lithium carbonate in a solid phase. That is to say, this preparation step makes it possible to obtain lithium sulfide without the use of any solvent such as water, through a gas-solid reaction (in other words, a dry reaction).

If the above-described composition is produced through a gas-solid reaction, the reaction apparatus for use in the production may be either a continuous apparatus or a batch apparatus.

From the viewpoint of smoothly causing a gas-solid reaction to occur, the powder of the lithium carbonate has an average particle size of, for example, preferably 1 µm or more, more preferably 3 µm or more, and even more preferably 6 µm or more. Meanwhile, the average particle size is, for example, preferably 100 µm or less, more preferably 80 µm or less, and even more preferably 55 µm or less. The "average particle size of lithium carbonate" as used herein refers to the volume-based cumulative particle size D₅₀ at a cumulative volume of 50 vol% based on a laser diffraction scattering particle size measurement method.

In the preparation step, the lithium carbonate can be subjected to a firing step in a state in which a powder of the lithium carbonate is allowed to stand or caused to flow in an atmosphere containing sulfur gas and hydrogen gas. The firing step can be performed in an open system. The state in which the firing step is performed in an open system means that the reaction system in which the firing step is performed is not located in an enclosed space. The firing step of lithium carbonate in the preparation step can be performed on a powder of the lithium carbonate while circulating an atmosphere containing sulfur gas and hydrogen gas. Specifically, the lithium carbonate can be fired while circulating a mixed gas containing sulfur gas and hydrogen gas inside a heating furnace in which a powder of the lithium carbonate is placed. Using such a firing method makes it possible to produce lithium carbonate efficiently on an industrial scale.

The mixed gas for use in the firing may contain, for example, only sulfur gas and hydrogen gas, or other gases in addition to sulfur gas and hydrogen gas. The other gases may be various inert gases, for example, nitrogen gas, rare gases such as argon, or the like. It is preferable, however, that the mixed gas does not contain gases other than sulfur gas and hydrogen gas, and inert gases used as necessary, from the viewpoint of successfully producing the desired lithium sulfide.

The reaction to produce lithium sulfide from lithium carbonate in the above-described preparation step is represented by Formula (1) below.

Li₂CO₃+S+H₂ → Li₂S+CO₂+H₂O (1)

As is clear from Reaction Formula (1), it is sufficient if only sulfur gas and hydrogen gas are contained in the mixed gas for use in the firing of lithium carbonate. However, from the viewpoint of safely and efficiently causing the reaction to occur, it is preferable to use hydrogen gas in a state of being diluted with an inert gas. Specifically, it is preferable that an inert gas such as nitrogen gas is used as a dilution gas, and the dilution gas is mixed with hydrogen gas, which is then mixed with sulfur gas to prepare a mixed gas that is to be supplied to lithium carbonate.

The mixing proportion of the dilution gas and the hydrogen gas is in such a manner that the proportion of the hydrogen gas is, for example, preferably 1.0 vol% or more, more preferably 1.5 vol% or more, and even more preferably 2.0 vol% or more, with respect to the total amount of the gases. Meanwhile, the proportion is, for example, preferably 4.0 vol% or less, more preferably 3.5 vol% or less, and even more preferably 3.0 vol% or less. This is because good safety and good reaction efficiency can be obtained.

It is advantageous that the sulfur gas that is to be mixed with hydrogen gas is obtained by liquefying solid sulfur through heating and then vaporizing the resultant, from the viewpoint of industrial simplicity and safety. In this case, solid sulfur is preferably heated, for example, to 200 to 380°C under atmospheric pressure, from the viewpoint of efficiency.

The amount of mixed gas that contains hydrogen gas and sulfur gas and is to be supplied to lithium carbonate is determined as appropriate in relation to the amount of the lithium carbonate. Specifically, the amount is determined as follows.

The amount of sulfur gas that is to be supplied is preferably determined in relation to the number of moles of lithium carbonate that is to be fired. That is to say, the sulfur gas is preferably contained in the firing atmosphere in such a manner that the value of the number of moles of sulfur element with respect to the number of moles of lithium carbonate is within a predetermined range. Specifically, the number of moles of sulfur element with respect to one mole of lithium carbonate is, for example, preferably 6.0 moles or more, more preferably 7.8 moles or more, and even more preferably 7.9 moles or more. Meanwhile, the number of moles of sulfur element is, for example, preferably 19.0 moles or less, more preferably 17.9 moles or less, and even more preferably 14.9 moles or less. This suppresses byproduction of impurities and provides lithium sulfide having a high purity. For example, lithium sulfate (Li₂SO₄) is a typical impurity substance that is formed as a byproduct when lithium carbonate is fired.

The amount of sulfur element supplied to lithium carbonate can be calculated from the amount of decrease in solid sulfur, for example, in the case in which sulfur gas is generated by heating solid sulfur.

The amount of hydrogen gas that is to be supplied is also preferably determined in relation to the number of moles of lithium carbonate that is to be fired. That is to say, the hydrogen gas is preferably contained in the firing atmosphere in such a manner that the value of the number of moles of hydrogen gas with respect to the number of moles of lithium carbonate is within a predetermined range. Specifically, the hydrogen gas is preferably contained in the firing atmosphere in such a manner that the value of the number of moles of hydrogen gas with respect to the number of moles of lithium carbonate is from 8.5 to 12.0. That is to say, the number of moles of hydrogen gas with respect to one mole of lithium carbonate is, for example, preferably 8.5 moles or more, more preferably 9.0 moles or more, and even more preferably 9.5 moles or more. Meanwhile, the number of moles of hydrogen gas is, for example, preferably 12.0 moles or less, more preferably 11.0 moles or less, and even more preferably 10.0 moles or less. This suppresses byproduction of impurities and provides lithium sulfide having a high purity.

The amount of hydrogen gas supplied to lithium carbonate can be measured, for example, using a flow meter installed between the hydrogen gas source (e.g., a hydrogen gas cylinder) and the reaction system (e.g., a heating furnace).

The firing temperature is, for example, preferably 650°C or higher, more preferably 700°C or higher, and even more preferably 723°C (which is the melting point of lithium carbonate) or higher, from the viewpoint of satisfactorily producing lithium sulfide. Also, the firing temperature is, for example, preferably 1310°C or lower, more preferably 1000°C or lower, and even more preferably 800°C or lower, from the viewpoint of obtaining good reaction efficiency of lithium carbonate and preventing lithium carbonate from decomposing.

In the case of supplying the mixed gas containing sulfur gas and hydrogen gas to lithium carbonate and firing the lithium carbonate, it is preferable to supply the mixed gas to lithium carbonate after the temperature of the reaction system reaches 650°C or higher, from the viewpoint of reliably producing lithium sulfide. For example, in the case of firing lithium carbonate that is placed in a heating furnace, it is preferable to circulate the mixed gas inside the heating furnace after the temperature in the heating furnace reaches 650°C or higher.

Meanwhile, it is preferable to supply only the inert gas into the reaction system without supplying the mixed gas into the reaction system, until the temperature of the reaction system reaches 650°C, from the viewpoint of suppressing the formation of impurities such as lithium sulfate. For example, in the case of firing lithium carbonate that is placed in a heating furnace, it is preferable to circulate only an inert gas such as nitrogen gas inside the heating furnace without circulating the mixed gas, until the temperature in the heating furnace reaches 650°C.

The firing time is set in such a manner that lithium sulfide is reliably produced, assuming that the amounts of sulfur element and hydrogen gas that are to be supplied are set to the values mentioned above. For example, in an X-ray diffraction pattern as measured using an X-ray diffraction (hereinafter alternatively referred to as "XRD") apparatus using CuKα1 rays, the lithium sulfide obtained in the present invention has a value of I_{b} to Iₐ, that is, a value of I_{b}/Iₐ of preferably 0.19 or less, and more preferably 0.070 or less, where the Iₐ is an intensity of a diffraction peak A, the I_{b} is an intensity of a diffraction peak B, and I_{c} is an intensity of a diffraction peak C, the peak A being a diffraction peak at the position of 2θ = 31.2°±1.0°, the peak B being a diffraction peak at the position of 2θ = 22.2°±1.0°, and the peak C being a diffraction peak at the position of 2θ = 21.3°±1.2°.

Also, a value of I_{c} to Iₐ, that is, a value of I_{c}/Iₐ is preferably 0.024 or less, more preferably 0.011 or less, and even more preferably 0.001 or less. If the firing time is set in this manner, lithium sulfide with suppressed presence of impurities can be successfully obtained.

The peak A is a diffraction peak derived from the (200) plane of lithium sulfide, and the peak B is a diffraction peak derived from the (11-1) plane of lithium sulfate. The peak C is a diffraction peak derived from the (110) plane of lithium carbonate.

The position of the peak A in the X-ray diffraction pattern as measured using the XRD apparatus is 2θ = 31.2°±1.0°, but may be 2θ = 31.2°±0.7°, 2θ = 31.2°±0.5°, or 2θ = 31.2°±0.3°.

The position of the peak B in the X-ray diffraction pattern as measured using the XRD apparatus is 2θ = 21.3°±1.2°, but may be 2θ = 21.3°±0.9°, 2θ = 21.3°±0.6°, or 2θ = 21.3°±0.3°.

The position of the peak C in the X-ray diffraction pattern as measured using the XRD apparatus is 2θ = 22.2°±1.0°, but may be 2θ = 22.2°±0.7°, 2θ = 22.2°±0.5°, or 2θ = 22.2°±0.3°.

In the preparation step of the composition, part of the mixed gas supplied for the firing of lithium carbonate may be discharged from the reaction system in an unreacted state or byproducts of the reaction may be discharged from the reaction system. For example, if sulfur gas is discharged from the reaction system in an unreacted state, for example, the sulfur gas can be solidified and removed by cooling the discharged gas. If hydrogen sulfide gas is discharged from the reaction system as a byproduct of the reaction, for example, the hydrogen sulfide can be oxidized and removed by bubbling the discharged gas in an aqueous solution of hypochlorous acid or a salt thereof.

After the supply of a predetermined amount of sulfur gas and hydrogen gas to lithium carbonate is completed, it is preferable to stop the reaction by stopping the circulation of the mixed gas and stopping the heating of the reaction system. In this manner, the desired composition can be obtained. In this composition, lithium sulfate is contained as an impurity in an amount to the extent that the above-mentioned XRD peak intensity ratio I_{b}/Iₐ has a value of 0.04 or more. The composition is subjected to a reaction step with hydrogen gas to remove the lithium sulfate contained in the composition, thereby increasing the purity of the lithium sulfide.

### Examples

Hereinafter, the present invention will be described in more detail by way of the following examples. However, the scope of the invention is not limited to such examples. Unless otherwise specified, "%" means "mass%".

### Example 1

### (1) Preparation of mixed gas

Hydrogen gas (with a concentration of 3.5 vol%) diluted with nitrogen gas was prepared. Solid sulfur was prepared separately and placed in a flask, after which the flask was heated to 200 to 380°C with a mantle heater to vaporize the solid sulfur and generate sulfur gas. The sulfur gas was then mixed with the hydrogen gas diluted with nitrogen gas to obtain a mixed gas. The ratio of sulfur gas and hydrogen gas in this mixed gas was set in such a manner that the value of the amount of hydrogen gas substance to sulfur was from 0.88 to 1.15, by adjusting the heating temperature of the solid sulfur, the flow rate of the hydrogen gas diluted with nitrogen gas, and the like.

### (2) Preparation of powder of lithium carbonate

A powder of lithium carbonate with D₅₀ of 5.9 µm was prepared. The powder of the lithium carbonate in the amount shown in Table 1 below was allowed to stand in a tube furnace.

### (3) Heating of tube furnace

The tube furnace was heated by applying electricity to an electric heater installed in the tube furnace. At this time, nitrogen gas was circulated inside the tube furnace.

### (4) Firing of lithium carbonate

After the temperature in the tube furnace reached the temperature shown in Table 1, this temperature was maintained, the mixed gas prepared in (1) was circulated inside the tube furnace, and the lithium carbonate was fired to produce lithium sulfide. The firing time was as shown in Table 1 below. The number of moles of sulfur element and hydrogen gas supplied to the lithium carbonate during this time was as expressed in per mole of lithium carbonate in the table. After the firing was completed for the time shown in the same table, the supply of the mixed gas was stopped.

### (5) Circulation of hydrogen-containing gas

Subsequently, the temperature in the tube furnace was increased from 750°C to 850°C, and while maintaining this temperature, hydrogen gas (with a concentration of 3.5 vol%) diluted with nitrogen gas was circulated inside the tube furnace, as the hydrogen-containing gas at the flow rate shown in Table 2 for the time shown in the table. The reaction was then terminated by stopping the supply of hydrogen-containing gas and stopping the heating of the tube furnace.

### Examples 2 and 3 and Reference Example

In Examples 2 and 3, lithium sulfide was produced in the same way as that of Example 1, except that the conditions shown in Tables 1 and 2 were employed. In Reference Example, heating was not performed in the reaction step. Lithium sulfide was produced in the same way as that of Example 1, except that the conditions shown in Tables 1 and 2 were employed.

### Evaluation

XRD measurements were performed on the lithium sulfide obtained in the examples and the reference example. Fig. 1 shows the results. The intensities Iₐ and I_{b} of the peaks A and B described above were determined, and I_{b}/Iₐ was calculated. Furthermore, the composition (mass%) of each substance contained in the product was calculated from the intensity of the corresponding peak. Table 2 shows the results. Note that "-" in the composition results in Table 2 refers to a value of 0.0011 or less, and "-" in the peak intensity ratio refers to a value of 0.001 or less.

The XRD measurement conditions were as follows.
- Apparatus name: Fully automatic multi-purpose X-ray diffractometer SmartLab SE (manufactured by Rigaku Corporation)
- Radiation source: CuKα1
- Tube voltage: 40 kV
- Tube current: 50 mA
- Measuring method: Concentration method (reflection method)
- Optical system: Multilayer mirror divergent beam method (CBO-α)
- Detector: One-dimensional semiconductor detector
- Incident solar slit: Solar slit 2.5°
- Length limiting slit: 10 mm
- Receiving solar slit: 2.5°
- Incident slit: 1/6°
- Receiving slit: 2 mm (open)
- Measurement range: 2θ = 10 to 120°
- Step width: 0.02°
- Scanning speed: 1.0°/min

**Table 1**

| | Example 1 | Example 2 | Example 3 | Reference Example |
|---|---|---|---|---|
| Firing temperature (°C) | 750 | 750 | 750 | 750 |
| Firing time (min) | 328 | 328 | 328 | 328 |
| Amount of Li₂CO₃ (g) | 1.5 | 3.0 | 6.0 | 1.5 |
| Amount of S volatilized/Li₂CO₃ (molar ratio) | 11.5 | 11.6 | 11.0 | 11.5 |
| Total amount of H₂/Li₂CO₃ (molar ratio) | 10.0 | 12.4 | 12.4 | 10.0 |

**Table 2**

| | | Example 1 | Example 2 | Example 3 | Reference Example |
|---|---|---|---|---|---|
| Heating temperature (°C) | | 850 | 850 | 850 | Not fired |
| Heating time (min) | | 120 | 120 | 120 | Not fired |
| Flow rate of H₂ diluted with N₂ (mL/min) | | 400 | 1000 | 2000 | 400 |
| Composition (mass%) | Li₂S | 98.6 | 97.9 | 99.5 | 94.6 |
| | Li₂SO₄ | - | - | - | 1.9 |
| | Li₂CO₃ | 1.1 | - | - | - |
| | Li₂O | - | 2.1 | 0.5 | 0.5 |
| | LiOH | - | - | - | 0.4 |
| | S | 0.004 | - | - | 2.6 |
| Peak intensity ratio (I_{b}/Iₐ) | | - | - | - | 0.0425 |

In the examples, lithium sulfide having a high purity with I_{b}/Iₐ of 0.001 or less was obtained from compositions with I_{b}/Iₐ of 0.04 or more. On the other hand, in the reference example, lithium sulfide with I_{b}/Iₐ of 0.0425 was obtained from a composition with I_{b}/Iₐ of 0.04 or more. From the description above, it was found that lithium sulfide obtained in the examples has a higher purity than that obtained in the reference example.

### Industrial Applicability

According to the present invention, lithium sulfide having a high purity can be produced.

## Claims

1. A method for producing lithium sulfide, comprising:
a preparation step of preparing a composition that, in an X-ray diffraction pattern as measured using an X-ray diffraction apparatus using CuKα1 rays, has a diffraction peak A at the position of 2θ = 31.2°±1.0° and a diffraction peak B at the position of 2θ = 22.2°±1.0°, and has a value of I_{b} to Iₐ of 0.04 or more, wherein the Iₐ is an intensity of the diffraction peak A and the I_{b} is an intensity of the diffraction peak B; and
a reaction step of reacting the composition with hydrogen gas.

2. The method for producing lithium sulfide according to claim 1, wherein the reaction step comprises circulating hydrogen gas inside a furnace in which the composition is placed, and heating the furnace.

3. The method for producing lithium sulfide according to claim 2, wherein the hydrogen gas is diluted with an inert gas.

4. The method for producing lithium sulfide according to any one of claims 1 to 3, wherein the reaction step comprises heating the furnace to 800°C or higher.
